# EUROPEAN PATENT SPECIFICATION

(11) **EP 4 299 956 B1**
(45) Date of publication and mention of the grant of the patent: **10.09.2025**
(21) Application number: 23180531.8
(22) Date of filing: 21.06.2023
(51) Int. Cl.: F16K 27/02, F16K 31/06, F16K 1/42

(54) **SOLENOID VALVE FOR DISPENSING A FLUID AND RELATIVE SPARE PARTS KIT**
MAGNETVENTIL ZUR ABGABE EINES FLUIDS UND ENTSPRECHENDES ERSATZTEILKIT
ÉLECTROVANNE POUR DISTRIBUER UN FLUIDE ET KIT DE PIÈCES DE RECHANGE ASSOCIÉ

(30) Priority: 28.06.2022 IT 202200013621
(43) Date of publication of application: 03.01.2024
(73) Proprietor: Tecomec S.r.l., 42124 Reggio Emilia (IT)
(72) Inventor: RICCARDI, Francesco, 42046 REGGIOLO (IT); FORNACIARI, Andrea, 42123 REGGIO EMILIA (IT)
(74) Representative: Paparo, Aldo

(56) References cited:
- EP-A1- 2 413 008
- EP-A1- 3 382 245
- DE-A1- 102015 206 854
- US-A1- 2020 063 886

## Description

The present invention relates to a solenoid valve for dispensing a fluid which is widely used in the agricultural sector.

The present invention also relates to a spare parts kit for the solenoid valve. As is known, the solenoid valves are used to spray the fields with fertilizers and/or similar products. The solenoid valves are usually mounted along a pipe in turn mounted on an agricultural vehicle equipped with a tank containing the liquid to be sprayed. In this situation, during the advancement of the agricultural vehicle on the field, the solenoid valves are opened or closed simultaneously or in a staggered manner with each other so as to nebulize the spraying liquid.

An example of solenoid valves can be seen in documents DE102015206854A1 and EP2413008A1.

The known solenoid valves comprise a nozzle body provided with at least one fluid inlet conduit and at least one fluid outlet conduit. The nozzle body is engaged to a valve body provided with a seat inside which a stem set in motion slides by means of the action of a solenoid. This stem is configured to allow the passage or prevent the passage of the fluid from the inlet conduit to the outlet conduit.

In particular, the stem, in its motion, intercepts, by opening and closing, a passage gap so as to allow or not the passage of the fluid.

In the known solenoid valves, between the stem and the passage gap, there is interposed at least one gasket configured to act as a mechanical abutment for the stroke of the stem.

In the known solenoid valves there are also further gasket rings interposed between the nozzle body and the diaphragm so as to fix the nozzle body to the valve body.

Disadvantageously, the known solenoid valves have drawbacks mainly related to their structural complexity.

In detail, the known solenoid valves are particularly complex to disassemble and require the operator to intervene using specific tools.

A further disadvantage is also given by the method of assembling the components of the valve. In particular, since the diaphragm must engage with the gasket, the diaphragm has a shape such as to cause the deposit of the debris and the impurities left by the fluid.

The structural complexity of the solenoid valve therefore makes the maintenance and disassembly (as well as the assembly) of the known solenoid valves particularly expensive in terms of time and cost.

The technical task of the present invention is therefore to make available a solenoid valve that is able to overcome the drawbacks which have emerged from the prior art.

The subject-matter of the present invention is therefore to make available a solenoid valve that is quick and easy to disassemble and assemble.

In particular, the subject-matter of the present invention is to provide a solenoid valve that can be easily disassembled and assembled so as not to require particular tools and to allow inspection and maintenance operations, which can be carried out by non-specialized personnel, even on an agricultural field.

A further object of the present invention is therefore to make available a solenoid valve that allows to more easily remove the deposit of debris contained in the fluid that flows in the solenoid valve itself and in particular to also access the individual components to carry out cleaning operations. A further object of the present invention is to make available a solenoid valve that allows the easy release of some components for possible replacements or maintenance operations.

The stated technical task and specified objects are substantially achieved by a solenoid valve comprising the technical features set forth in one or more of the appended claims. The dependent claims correspond to possible embodiments of the invention.

In particular, the specified technical task is substantially achieved by a solenoid valve for dispensing a fluid, in particular a fluid for agricultural use, comprising a nozzle body provided with a fluid inlet section and a fluid outlet section. The nozzle body further comprises an attachment portion interposed between the inlet section and the outlet section. The solenoid valve, subject-matter of the present invention, further comprises a box-shaped body connected or connectable, through reversible hooking means, to the attachment portion of the nozzle body comprising a solenoid and a movable core sliding within the solenoid itself between a first operating position and a second operating position. The solenoid valve further comprises a connecting body comprising a fixing component, fixed or fixable to the box-shaped body so as to define a passage seat for the core, and a gasket fixed or fixable to the attachment portion so as to be interposed between the fixing component and the nozzle body. The solenoid valve further comprises a hollow cylindrical body, retained by the gasket fixed to the attachment portion and so as to be contained at least partially in the passage seat of the core, and configured to enable fluid to pass between the inlet section and the outlet section of the nozzle body, when the core is in the first operating position in which the core is spaced apart from the hollow cylindrical body, and receive in abutment the core itself, when the core is in the second operating position, so as to prevent fluid passing between the inlet section and the outlet section.

Advantageously, the fact that the core comes directly into abutment with the hollow cylindrical body allows to avoid the interposition of further sealing elements making the assembly and disassembly of the solenoid valve simple and fast, with direct access to all the components for inspection, maintenance and cleaning operations.

Advantageously, the absence of mounting screws for the assembly of the solenoid valve contributes to making the latter further easy to disassemble and maintain.

Advantageously, the presence of removable hooking means enables the decoupling and coupling of the housed coil, within the box-shaped body from the solenoid to carry out rapid component replacement and maintenance operations.

Preferably, the solenoid valve further comprises a filtering element configured to filter impurities contained in the entering fluid. This filtering element is retained between the fixing component and the hollow cylindrical body.

Advantageously, the filtering element makes the operation of cleaning the sediments from the solenoid valve easy as it is sufficient to remove said element and replace it with a new one which in combination with the ease of assembly and disassembly of the solenoid valve makes this operation simple and fast.

Further characteristics and advantages of the present invention will become more apparent from the indicative and thus non-limiting description of an embodiment of a solenoid valve.

Such a description will be set out below with reference to the accompanying drawings, which are provided solely for illustrative and therefore non-limiting purposes, in which:
- figure 1 shows an exploded view of a first variant of a solenoid valve subject-matter of the present invention;
- figure 2 shows a sectional view of the solenoid valve of figure 1;
- figure 3 shows a plan view of the solenoid valve of figure 1;
- figure 4 shows an exploded view of a second variant of a solenoid valve according to the present invention;
- figure 5 shows a sectional view of the solenoid valve of figure 4;
- figure 6 shows a spare parts kit for the solenoid valve of figures 1-3;
- figure 7 shows a spare parts kit for the solenoid valve of figures 4-5;

With reference to the accompanying figures, 1 denotes a solenoid valve for dispensing a fluid, in particular a fluid for agricultural use, and 100 denotes a spare parts kit for replacing the moving parts of the solenoid valve 1. The term "fluid for agricultural use" means products such as fertilisers, manures, herbicides, fungicides and other solutions used in agriculture.

The solenoid valve 1, subject-matter of the present invention, comprises a nozzle body 2 provided with a fluid inlet section 2a and a fluid outlet section 2b. The nozzle body 2 further comprises an attachment portion 2c interposed between the inlet section 2a and the outlet section 2b.

Preferably, the attachment portion 2c comprises an inlet conduit 2c' communicating with the inlet section 2a and an outlet conduit 2c" coaxial with the inlet conduit 2c' and communicating with the outlet section 2b.

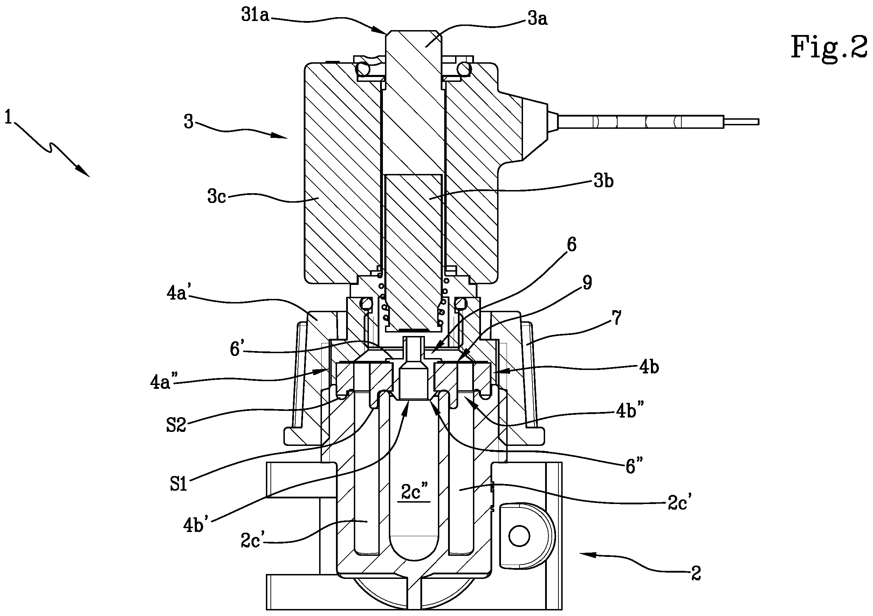

Even more preferably, as shown in the section of figure 2, the outlet conduit 2c" is coaxially internal to the inlet conduit 2c'.

The solenoid valve 1 further comprises a box-shaped body 3 connected or connectable to the attachment portion 2c of the nozzle body 2.

Said box-shaped body 3 comprises a solenoid 3a and a movable core 3b sliding within the solenoid 3a between a first operating position and a second operating position as will be described in detail below. In other words, the box-shaped body 3 is provided with a seat within which the solenoid 3a is at least partially coupled, keeping it facing the attachment portion 2c.

Preferably, the box-shaped body 3 further comprises a coil 3c configured to supply an electric current to the solenoid 3a so as to create a magnetic field to move the core 3b.

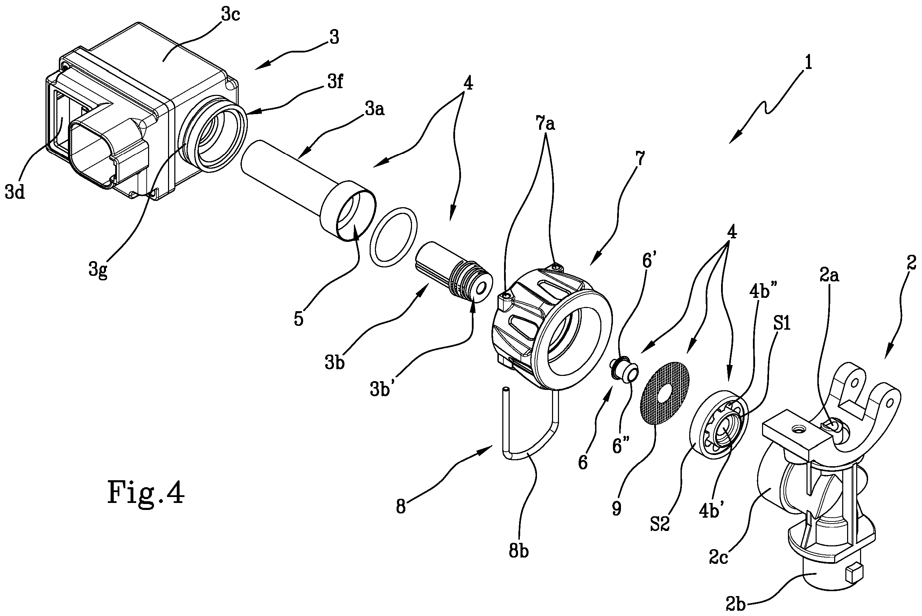

Even more preferably, as illustrated in the second variant of figures 4-5, the coil 3c can be further configured to interact with a control unit 3d able to control the coil 3c of the solenoid valve 1 so as to manage the flow of the fluid to be dispensed.

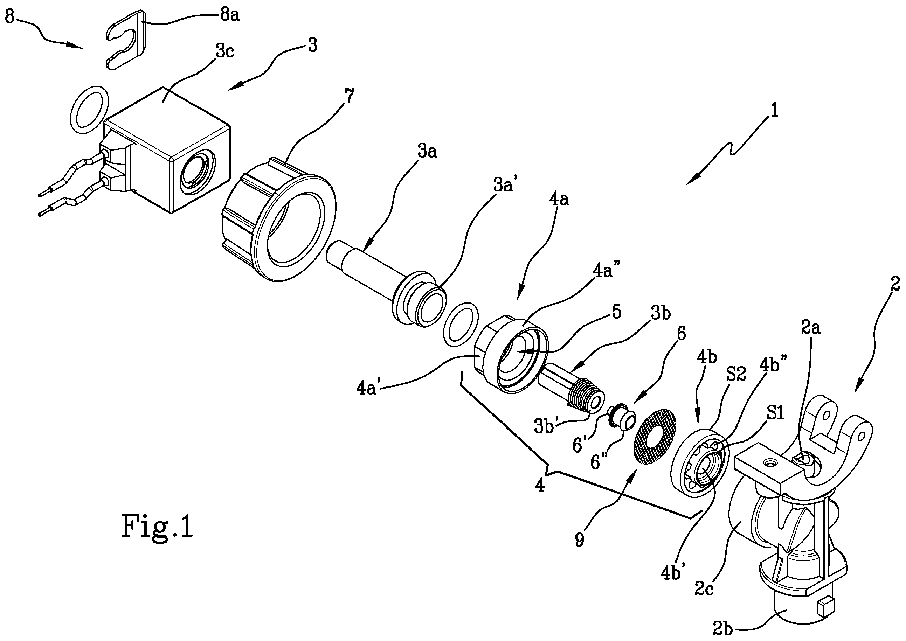

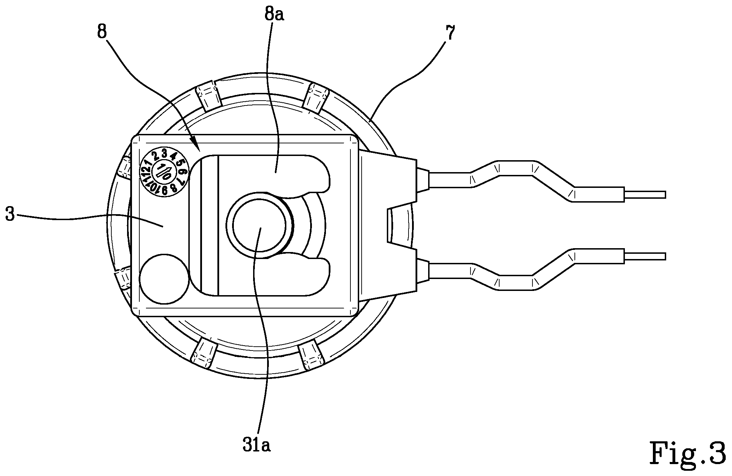

As shown in the variant of figures 1-3, the solenoid valve 1 further comprises a connecting body 4 having a fixing component 4a, fixed or fixable to the box-shaped body 3 so as to define a passage seat 5 for the core 3b.

Preferably, the fixing body 4a is substantially hollow and has a first portion 4a' with shaped section and a second portion 4a" with circular section having a larger diameter than the first portion 4a'. In greater detail, a first opening is obtained in the first portion 4a' while a second opening communicating with the first opening and having a diameter greater than the first opening is obtained in the second portion 4a". Such openings define the passage seat 5 for the core 3b during its sliding motion.

In the embodiment shown in the accompanying figures 1-3, the solenoid 3a comprises a portion 3a' at least partially protruding from the box-shaped body 3 and configured to be inserted, for example by threaded coupling, within the first portion 4a' of the fixing component 4a. In such a situation, the passage seat 5 for the core 3b is thus delimited by the first opening made in the first portion 4a' of the fixing body 4a into which the portion 3a' of the solenoid 3b is inserted and by the second opening made on the second portion 4a" of the fixing body 4a.

To retain the fixing body 4a in position, like for example represented in the preferred embodiment, the connecting body 4 is externally wrapped by a sealing element 7 having an end engaged with the box-shaped body 3 and an end engaged with the nozzle body 2. Preferably, the sealing element 7 also has an internal shaping, for example a circular rib, configured to retain the fixing body 4a.

In the variant embodiment illustrated in figures 4-5, the connecting body 4 is replaced by a flange integrated in the box-shaped body 3. In this variant the sealing element 7 is directly coupled to the flange integrated in the box-shaped body 3

The coupling between sealing element 7 and box-shaped body 3 is implemented through the use of reversible hooking means 8.

In a first embodiment, applied to the first and second variants of solenoid valve 1 illustrated in figures 1-3, the reversible hooking means 8 is defined by a fixing clip 8a.

In said first embodiment, the solenoid 3a has a head portion 31a passing through the box-shaped body 3 and emerging therefrom. The reversible hooking means 8 intercept the head portion 31a making an integral connection between the solenoid 3a and the box-shaped body 3.

In other words, the fixing clip 8a intercepts the head portion 31a and, by effect of an abutment surface of the fixing clip 8a, prevents the solenoid 3a from being able to slip off the box-shaped body 3.

In the event that it is necessary to replace the box-shaped body 3, and with it the coil 3, it is sufficient to release the reversible hooking means 8 to disconnect the box-shaped body 3 from the solenoid 3a.

In the second embodiment of the solenoid valve 1 illustrated in figures 4-5, the reversible hooking means 8 is defined by a fork 8b.

In said second embodiment, the sealing element 7 has a pair of through holes 7a, transversely passing through the sealing element 7 and the box-shaped body 3 has a protuberance 3f with a circular groove 3g.

The reversible hooking means 8 is coupled in the pair of through holes 7a by intercepting the groove 3g therein.

In other words, the fork 8b has a pair of arms coupled in the pair of through holes 7a and the spacing between the arms is such as to trap the groove 3g of the protuberance 3f therein.

Also in this case, when it is necessary to replace the box-shaped body 3a and with it the coil 3c it is sufficient to release the reversible hooking means 8 to disconnect the box-shaped body 3 from the sealing element 7.

As shown in the accompanying figures, the connecting body 4 further comprises a gasket 4b fixed or fixable to the attachment portion 2c so as to be interposed between the fixing component 4a and the nozzle body 2.

Preferably, the gasket 4b comprises a main conduit 4b' coaxial to the outlet conduit 2c" of the valve body 2 and at least one secondary conduit 4b" in fluid communication with the inlet conduit 2c' of the valve body 2.

In the preferred embodiment, the at least one secondary conduit 4b" is further in fluid communication with the second portion 4a" of the fixing component 4a and therefore with the passage seat 5 so that the fluid can flow from the inlet conduit 2c' to the passage seat 5. In such a situation, the fluid entering the inlet conduit 2c' passes within the at least one secondary conduit 4b" and flows into the passage seat 5 as will be described in detail below.

As shown in the accompanying figures, the gasket 4b further comprises a first circular projection "S2" extending along an outer edge of the gasket 4b and configured to engage within a respective circular recess obtained in an outer wall of the attachment portion 2c and a second circular projection "S1" extending around the main conduit 4b' and configured to be inserted at least partially within the inlet conduit 2c'. The first circular projection "S2" and the second circular projection "S1" delimit the at least one secondary conduit 4b".

In a preferred embodiment, as visible in figures 1 and 4, the secondary conduit 4b" is defined by a series of openings, for example having a circular or semicircular section, angularly distributed around the main conduit 4b', while the main conduit 4b' is substantially defined by a through hole.

In other words, the gasket 4b is shaped so as to engage with the nozzle body 2 by means of the circular projections "S1", "S2" to allow the entry of the fluid from the inlet conduit 2c' to the passage seat 5 and subsequently from the passage seat 5 itself to the outlet conduit 2c" when the core 3b is in the first operating position.

Advantageously, the fact that the gasket 4b is fixed to the attachment portion 2c of the nozzle body 2, for example by means of a shape coupling defined by the recesses and by the projections "S1", "S2", makes it possible to facilitate and speed up the assembly and disassembly of the solenoid valve 1 without the need to intervene with appropriate tools.

The solenoid valve 1, subject-matter of the present invention, further comprises a hollow cylindrical body 6 retained by the gasket 4b, fixed to the attachment portion 2c, so as to be contained at least partially in the passage seat 5.

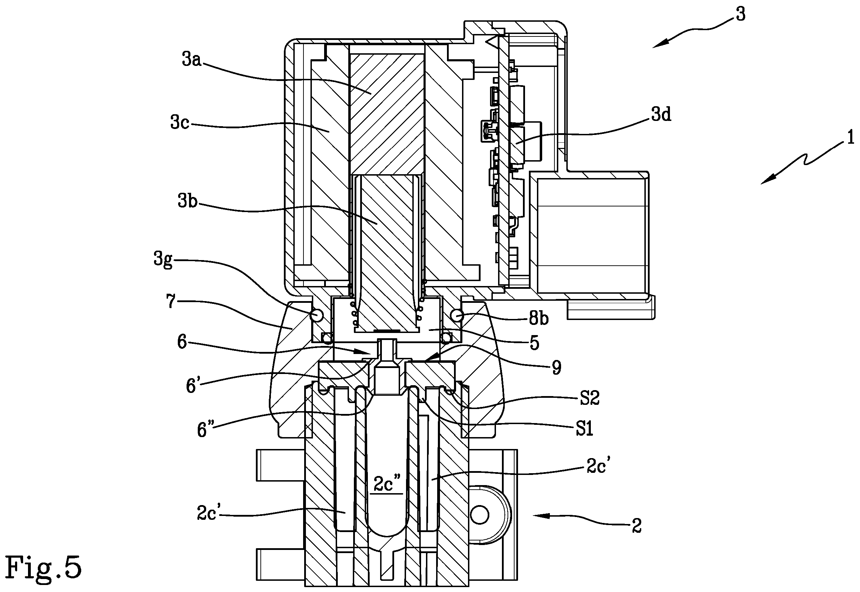

In particular, as shown in figures 2 and 5, it is the main conduit 4b' of the gasket 4b that is configured to retain the hollow cylindrical body 6. In such a situation, the fluid to be dispensed, once arrived at the passage seat 5 passes within the hollow cylindrical body 6 to outflow from the outlet conduit 2c" of the attachment portion 2c of the nozzle body 2.

The fact that the hollow cylindrical body 6 is retained by the gasket 4b, and in particular by the main conduit 4b', is particularly advantageous since it is possible that several nozzle bodies 2 have different diameters of outlet ducts 2c". In this situation, in order to adapt the gasket 4b to the nozzle 2, the diameter of the main conduit 4b' of the gasket 4b must simply be adapted so that it complies with the outlet conduit 2c" and the relative hollow cylindrical body 6.

As previously described, the hollow cylindrical body 6 is configured to allow fluid to pass between the inlet section 2a and the outlet section 2b of the nozzle body 2. In particular, the passage of fluid is allowed when the core 3b is in the first operating position in which the core 3b is spaced apart from the hollow cylindrical body 6. In such a configuration, the core 3b is inserted into the box-shaped body 3 so that an end portion thereof is inserted into the first portion 4a' of the fixing body 4a. In doing so, the fluid entering the inlet conduit 2c' passes through the at least one secondary conduit 4b" towards the passage seat 5. In such a situation, the fluid passes within the hollow cylindrical body 6 and flows into the outlet conduit 2c" of the attachment portion 2c of the nozzle body 2.

The hollow cylindrical body 6 is further configured to receive in abutment the core 3b when the core 3b is in the second operating position so as to prevent fluid passing between the inlet section 2a and the outlet section 2b. In such a configuration, the core 3b projects from the first portion 4a' of the fixing body 4a so as to close the passage defined by the hollow cylindrical body 6 by preventing the fluid from passing from the passage seat 5 to the outlet conduit 2c" of the attachment portion 2c.

In use, when the core 3b is in the first operating position, i.e. it is distal with respect to the hollow cylindrical body 6, the fluid is free to flow defining a flow between the inlet conduit 2c' and the outlet conduit 2c". In other words, the fluid defines a flow that from the inlet conduit 2c', passes through the secondary conduit 4b" made in the gasket 4b, flows within the passage seat 5 defined by the fixing component 4a and from the passage seat 5 passes through the hollow cylindrical body 6, inserted in the main conduit 4b' of the gasket 4b, outflowing through the outlet conduit 2c".

On the contrary, when the core 3b is in the second operating position, i.e. it is in abutment with the hollow cylindrical body 6, the flow of fluid is prevented and therefore the core 3b prevents the fluid from flowing inside the hollow cylindrical body 6 towards the outlet conduit 2c".

Preferably, the hollow cylindrical body 6 projects slightly from the main conduit 4b' so as to present a first surface 6' partially inserted in the passage seat 5 and a second surface 6", opposite to the first surface 6', at least partially inserted in the outlet conduit 2c".

More in detail, the first surface 6' faces the core 3b and is shaped so as to have a circular crown configured to rest directly on the gasket 4b.

In the embodiment illustrated in the accompanying figures, also the second surface 6" of the hollow cylindrical body 6, inserted in the outlet conduit 2c", has a circular crown resting on the gasket 4b in such a way that the hollow cylindrical body 6 is locked inside the gasket 4b itself.

Advantageously, this conformation of the cylindrical body 6 allows the latter to remain firmly in position without the need to introduce additional gaskets or screws.

When the core 3b is in the second operating position, the flow of fluid is totally prevented and there are no leaks, the hollow cylindrical body 6 comprises a surface 6' (coincident with the aforementioned first surface) counter-shaped on an end surface 3b' of the core 3b such that the end surface 3b' adheres to the hollow cylindrical body 6.

Advantageously, the fact that the core 3b is in direct mechanical abutment with the hollow cylindrical body 6 allows to avoid the interposition of further fixing elements and/or gaskets that would make it difficult to disassemble the solenoid valve 1 during maintenance.

In use, to prevent or allow the passage of fluid through the solenoid valve 1, the core 3b is moved in sliding, thanks to the action of the solenoid 3a, between the first operating position, in which it is distal with respect to the hollow cylindrical body 6 and allows the fluid to pass from the inlet conduit 2c' to the outlet conduit 2c" through the hollow cylindrical body 6 itself, and the second operating position, in which the core 3b is in abutment with the counter-shaped surface 6' of the hollow cylindrical body 6 so as to obstruct the outlet conduit 2c" and prevent the fluid from passing.

Preferably, the core 3b can also maintain an intermediate position between the first operating position, in which the flow of fluid is maximum, and the second operating position, in which the flow of fluid is nil, so as to allow a smaller flow of fluid to pass from the inlet conduit 2c' to the outlet conduit 2c".

In a preferred embodiment, the solenoid valve 1 further comprises a filtering element 9 configured to filter impurities contained in the fluid entering the solenoid valve 1 itself.

The purpose of the filtering element 9 is to prevent large-sized impurities from interfering with the movement of the core 3b within the solenoid 3a generating malfunctions and even seizures therebetween.

Preferably, but not in a limiting manner, the filtering element 9 is made in the form of a wire mesh.

The filtering element 9 is retained between the fixing component 4a and the hollow cylindrical body 6.

Advantageously, the presence and the positioning of the filtering element 9 allow to extend the useful life of the gasket 4b as they prevent impurities present in the fluid from ruining and/or clogging the gasket 4b.

Advantageously, the presence and the positioning of the filtering element 9 allow to obtain an easier and faster maintenance since it is enough to replace the filtering element 9 without completely disassembling the solenoid valve 1.

Preferably, the filtering element 9 has a substantially circular shape having a central hole to enable the hollow cylindrical body 6 to be inserted into the gasket 4b.

In use, the fluid passes from the inlet conduit 2c' of the attachment portion 2c to the secondary conduit 4b". Between the gasket 4b and the fixing component 4a, i.e. in the passage between the secondary conduit 4b" and the passage seat 5, the fluid passes through the filtering element so that the impurities remain trapped therein. Subsequently, if the core 3b is in the second operating position, i.e. if it is spaced apart from the hollow cylindrical body 6, the fluid passes from the passage seat 5 in the hollow cylindrical body 6 towards the outlet conduit 2c".

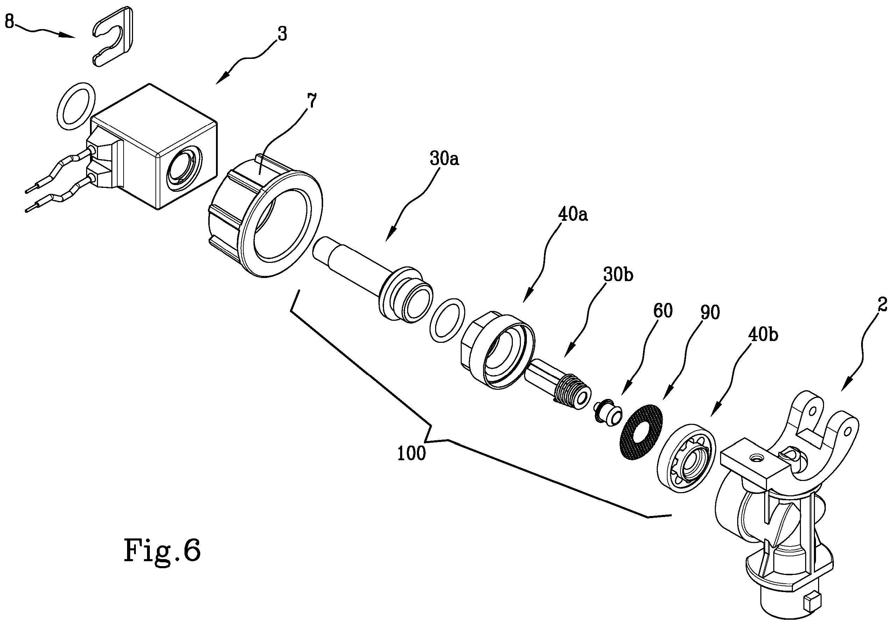

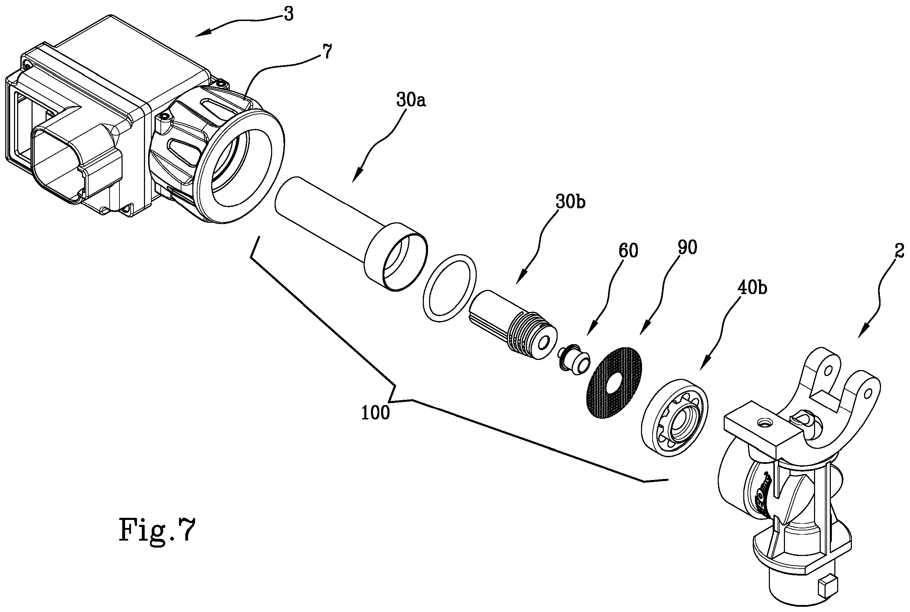

Figure 6 illustrates the spare parts kit 100 for the first variant of solenoid valve 1, illustrated in figures 1-3, and figure 7 illustrates the spare parts kit 100 for the second variant of solenoid valve 1, illustrated in figures 4-5.

The kit 100 comprises the parts of the solenoid valve 1 most subject to wear, i.e. the parts that are, during normal operation of the solenoid valve 1, in motion.

More specifically, the kit 100 comprises at least one replacement solenoid 30a, a replacement core 30b, the replacement hollow cylindrical body 60, a replacement gasket 40b and a replacement filtering element 90.

For the first variant of solenoid valve, illustrated in the figure, in figures 1-3, the kit 100 may also comprise a replacement fixing component 40a.

By supplying the kit 100 to a user, the latter will be able, by decoupling the sealing element 7 without the use of specific tools, to access directly inside the solenoid valve 1 and evaluate whether to replace worn parts. In this way it will be possible to restore the correct operation of the solenoid valve without replacing the electronic part.

The present invention achieves the proposed objects, eliminating the drawbacks that have emerged from the known art.

In particular, the possibility of closing the core 3b in abutment directly on the gasket 4b simplifies the structure of the entire solenoid valve 1 greatly facilitating the assembly and disassembly thereof so as to allow the operator not to have to intervene with specific tools.

The presence of the filtering element 9 allows to reduce the wear and the phenomena of clogging of the gasket 4b and therefore of the entire solenoid valve 1.

## Claims

1. A solenoid valve (1) for dispensing a fluid, in particular a fluid for agricultural use, comprising:
- a nozzle body (2) provided with an inlet section (2a) of said fluid and an outlet section (2b) of said fluid, said nozzle body (2) further comprising an attachment portion (2c) interposed between said inlet section (2a) and said outlet section (2b) and comprising an inlet conduit (2c') communicating with said inlet section (2a) and an outlet conduit (2c") coaxial with said inlet conduit (2c') and communicating with the outlet section (2b);
- a box-shaped body (3) connected or connectable to the attachment portion (2c) of the nozzle body (2) and comprising a solenoid (3a) and a movable core (3b) sliding within said solenoid (3a) between a first operating position and a second operating position; and
- a connecting body (4) fixed or fixable to said box-shaped body (3) so as to define a passage seat (5) for said core (3b), and a gasket (4b) fixed or fixable to said attachment portion (2c) so as to be interposed between the connecting body (4) and said nozzle body (2), said gasket (4b) comprising a main conduit (4b'), coaxial with said outlet conduit (2c") of the valve body (2) and configured to retain said hollow cylindrical body (6), and at least one secondary conduit (4b") in fluid communication with said inlet conduit (2c') of the valve body (2) and said passage seat (5) of the core (3b);
- a hollow cylindrical body (6), retained by said gasket (4b) fixed to the attachment portion (2c), and so as to be contained at least partially in said passage seat (5) of the core (3b), and configured to enable fluid to pass between the inlet section (2a) and the outlet section (2b) of the nozzle body (2), when the core (3b) is in said first operating position in which the core (3b) is spaced apart from said hollow cylindrical body (6), and receive in abutment said core (3b), when the core (3b) is in said second operating position, so as to prevent fluid passing between said inlet section (2a) and said outlet section (2b),
**characterised in that** said gasket (4b) comprises a first circular projection (S2) extending along an outer edge of said gasket (4b) and configured to engage within a respective circular recess obtained in an outer wall of said attachment portion (2c) and a second circular projection (S1) extending around said main conduit (4b') and configured to be inserted at least partially within said inlet conduit (2c'), said first circular projection (S2) and said second circular projection (S1) delimiting said at least one secondary conduit (4b").

2. The solenoid valve (1) according to claim 1, wherein said hollow cylindrical body (6) comprises a surface (6') counter-shaped on an end surface (3b') of said core (3b) such that said end surface (3b') adheres to said hollow cylindrical body (6) when the core (3b) is in said second operating position.

3. The solenoid valve (1) according to claim 2, wherein said counter-shaped surface (6') faces said passage seat (5) and is shaped so as to have a circular crown configured to rest directly on said gasket (4b).

4. The solenoid valve (1) according to one or more of the preceding claims comprising a filtering element (9) configured to filter impurities contained in said fluid entering said solenoid valve (1), said filtering element (9) being retained between said gasket (4b) and said hollow cylindrical body (6).

5. The solenoid valve (1) according to claim 4, wherein said filtering element (9) has a substantially circular shape having a central hole to enable said hollow cylindrical body (6) to be inserted into said gasket (4b).

6. The solenoid valve (1) according to one or more of the preceding claims wherein said box-shaped body (3) comprises a coil (3c) configured to supply an electric current to said solenoid (3a) so as to create a magnetic field to move said core (3b).

7. The solenoid valve (1) according to one or more of the preceding claims wherein said solenoid (3a) comprises a portion (3a') projecting partially from said box-shaped body (3) and configured to engage by shape coupling within a suitable opening of a fixing component (4a), fixed to or fixable to said box-shaped body (3) and defining the passage seat (5) for the core (3b).

8. The solenoid valve (1) according to one or more of the preceding claims, comprising a seal element (7) configured to wrap externally said connecting body (4), said seal element (7) having an end engaged with said box-shaped body (3), through the engagement of reversible fixing means (8), and a second end engaged with said nozzle body (2).

9. The solenoid valve (1) according to claim 8 wherein said reversible fixing means (8) enables locking and unlocking the box-shaped body (3) on the seal element (7) to enable the coil (3c) to be replaced.

10. The solenoid valve (1) according to claim 1 wherein said solenoid (3a) traverses the box-shaped body (3) until it exits with a head portion (31a) from the box-shaped body (3); said head portion (31a) being engageable with reversible hooking means (8) to promote a removable connection of the box-shaped body (3) to the solenoid (3a).

## Patentansprüche

1. Magnetventil (1) zur Abgabe eines Fluids, insbesondere eines Fluids für landwirtschaftliche Nutzung, umfassend:
- einen Düsenkörper (2), der mit einer Einlasssektion (2a) des Fluids und einer Auslasssektion (2b) des Fluids versehen ist, wobei der Düsenkörper (2) ferner einen Befestigungsabschnitt (2c) umfasst, der zwischen der Einlasssektion (2a) und der Auslasssektion (2b) eingesetzt ist und eine Einlassleitung (2c') umfasst, die mit der Einlasssektion (2a) kommuniziert, und eine Auslassleitung (2c"), die koaxial zur Einlassleitung (2c') angeordnet ist und mit der Auslasssektion (2b) kommuniziert;
- einen kastenförmigen Körper (3), der mit dem Befestigungsabschnitt (2c) des Düsenkörpers (2) verbunden oder verbindbar ist und ein Solenoid (3a) und einen bewegbaren Kern (3b), der innerhalb des Solenoids (3a) zwischen einer ersten Betriebsposition und einer zweiten Betriebsposition verschoben wird, umfasst; und
- einen Verbindungskörper (4), der an dem kastenförmigen Körper (3) derart fixiert oder fixierbar ist, dass ein Durchgangssitz (5) für den Kern (3b) definiert wird, und eine Dichtung (4b), die an dem Befestigungsabschnitt (2c) derart fixiert oder fixierbar ist, dass sie zwischen dem Verbindungskörper (4) und dem Düsenkörper (2) eingesetzt ist, wobei die Dichtung (4b) eine Hauptleitung (4b') umfasst, die koaxial zu der Auslassleitung (2c") des Ventilkörpers (2) angeordnet und ausgelegt ist, um den hohlen, zylindrischen Körper (6) und mindestens eine Hilfsleitung (4b") in Fluidkommunikation mit der Einlassleitung (2c') des Ventilkörpers (2) und dem Durchgangssitz (5) des Kerns (3b) zu halten;
- einen hohlen, zylindrischen Körper (6), der von der Dichtung (4b) gehalten wird, die an dem Befestigungsabschnitt (2c) fixiert ist, sodass er zumindest teilweise in dem Durchgangssitz (5) des Kerns (3b) enthalten ist, und der ausgelegt ist, um dem Fluid zu ermöglichen, zwischen der Einlasssektion (2a) und der Auslasssektion (2b) des Düsenkörpers (2) durchzulaufen, wenn sich der Kern (3b) in der ersten Betriebsposition befindet, in der der Kern (3b) von dem hohlen, zylindrischen Körper (6) beabstandet angeordnet ist, und im Anschlag den Kern (3b) aufzunehmen, wenn sich der Kern (3b) in der zweiten Betriebsposition befindet, sodass verhindert wird, dass Fluid zwischen der Einlasssektion (2a) und der Auslasssektion (2b) durchläuft,
**dadurch gekennzeichnet, dass** die Dichtung (4b) einen ersten kreisförmigen Vorsprung umfasst, der sich entlang einer Außenkante der Dichtung (4b) erstreckt und ausgelegt ist, um in einer jeweiligen kreisförmigen Ausnehmung in Eingriff zu gelangen, die in einer Außenwand des Befestigungsabschnitts (2c) ausgebildet ist, und einen zweiten kreisförmigen Vorsprung (S1), der sich rund um die Hauptleitung (4b') erstreckt und ausgelegt ist, um zumindest teilweise in die Einlassleitung (2c') eingefügt zu werden, wobei der erste kreisförmige Vorsprung (S2) und der zweite kreisförmige Vorsprung (S1) mindestens eine Hilfsleitung (4b") begrenzen.

2. Magnetventil (1) nach Anspruch 1, wobei der hohle, zylindrische Körper (6) eine Oberfläche (6') umfasst, die auf einer Endoberfläche (3b') des Kerns (3b) gegenständig ausgeformt ist, sodass die Endoberfläche (3b') an dem hohlen, zylindrischen Körper (6) anliegt, wenn sich der Kern (3b) in der zweiten Betriebsposition befindet.

3. Magnetventil (1) nach Anspruch 2, wobei die gegenständig ausgeformte Oberfläche (6') dem Durchgangssitz (5) zugewandt und derart ausgeformt ist, dass sie einen kreisförmigen Kranz aufweist, der ausgelegt ist, um direkt auf der Dichtung (4b) aufzuliegen.

4. Magnetventil (1) nach einem oder mehreren der vorhergehenden Ansprüche, umfassend ein Filterelement (9), das ausgelegt ist, um Verunreinigungen zu filtern, die in dem Fluid enthalten sind, das in das Magnetventil (1) einströmt, wobei das Filterelement (9) zwischen der Dichtung (4b) und dem hohlen, zylindrischen Körper (6) gehalten wird.

5. Magnetventil (1) nach Anspruch 4, wobei das Filterelement (9) eine im Wesentlichen kreisförmige Form aufweist, aufweisend ein mittiges Loch, um dem hohlen, zylindrischen Körper (6) zu ermöglichen, in die Dichtung (4b) eingefügt zu werden.

6. Magnetventil (1) nach einem oder mehreren der vorhergehenden Ansprüche, wobei der kastenförmige Körper (3) eine Spule (3c) umfasst, die ausgelegt ist, um das Solenoid (3a) mit einem elektrischen Strom zu versorgen, sodass ein Magnetfeld erzeugt wird, um den Kern (3b) zu bewegen.

7. Magnetventil (1) nach einem oder mehreren der vorhergehenden Ansprüche, wobei das Solenoid (3a) einen Abschnitt (3a') umfasst, der teilweise von dem kastenförmigen Körper (3) hervorspringt und ausgelegt ist, um per formschlüssiger Kupplung in einer geeigneten Öffnung einer Fixierkomponente (4a) in Eingriff zu gelangen, die an dem kastenförmigen Körper (3) fixiert oder fixierbar ist und den Durchgangssitz (5) für den Kern (3b) definiert.

8. Magnetventil (1) nach einem oder mehreren der vorhergehenden Ansprüche, umfassend ein Siegelelement (7), das ausgelegt ist, um den Verbindungskörper (4) außenseitig zu umhüllen, wobei das Siegelelement (7) ein Ende aufweist, das mit dem kastenförmigen Körper (3) durch den Eingriff reversibler Fixiermittel (8) im Eingriff ist, und ein zweites Ende, das mit dem Düsenkörper (2) im Eingriff ist.

9. Magnetventil (1) nach Anspruch 8, wobei die reversiblen Fixiermittel (8) das Festspannen und Lösen des kastenförmigen Körpers (3) auf dem Siegelelement (7) ermöglichen, um zu ermöglichen, dass die Spule (3c) ersetzt wird.

10. Magnetventil (1) nach Anspruch 1, wobei das Magnetventil (3a) den kastenförmigen Körper (3) durchquert, bis es mit einem Kopfabschnitt (31a) aus dem kastenförmigen Körper (3) austritt, wobei der Kopfabschnitt (31a) mit reversiblen Hakenmitteln (8) in Eingriff gelangen kann, um eine entfernbare Verbindung des kastenförmigen Körpers (3) mit dem Solenoid (3a) zu fördern.

## Revendications

1. Électrovanne (1) pour distribuer un fluide, en particulier un fluide à usage agricole, comprenant :
- un corps de buse (2) pourvu d'une section d'entrée (2a) dudit fluide et d'une section de sortie (2b) dudit fluide, ledit corps de buse (2) comprenant en outre une portion de fixation (2c) interposée entre ladite section d'entrée (2a) et ladite section de sortie (2b) et comprenant un conduit d'entrée (2c') communiquant avec ladite section d'entrée (2a) et un conduit de sortie (2c") coaxial audit conduit d'entrée (2c') et communiquant avec la section de sortie (2b) ;
- un corps en forme de boîte (3) relié ou reliable à la portion de fixation (2c) du corps de buse (2) et comprenant un solénoïde (3a) et un noyau mobile (3b) coulissant à l'intérieur dudit solénoïde (3a) entre une première position de fonctionnement et une seconde position de fonctionnement ; et
- un corps de liaison (4) fixé ou pouvant être fixé audit corps en forme de boîte (3) de manière à définir un siège de passage (5) pour ledit noyau (3b), et un joint (4b) fixé ou fixable à ladite portion de fixation (2c) de manière à être interposé entre le corps de liaison (4) et ledit corps de buse (2), ledit joint (4b) comprenant un conduit principal (4b'), coaxial audit conduit de sortie (2c") du corps de vanne (2) et configuré pour retenir ledit corps cylindrique creux (6), et au moins un conduit secondaire (4b") en communication fluidique avec ledit conduit d'entrée (2c') du corps de vanne (2) et ledit siège de passage (5) du noyau (3b) ;
- un corps cylindrique creux (6), retenu par ledit joint (4b) fixé à la portion de fixation (2c), et de manière à être contenu au moins partiellement dans ledit siège de passage (5) du noyau (3b), et configuré pour permettre au fluide de passer entre la section d'entrée (2a) et la section de sortie (2b) du corps de buse (2), lorsque le noyau (3b) est dans ladite première position de fonctionnement dans laquelle le noyau (3b) est espacé dudit corps cylindrique creux (6), et recevoir en butée ledit noyau (3b), lorsque le noyau (3b) est dans ladite seconde position de fonctionnement, de manière à empêcher le passage de fluide entre ladite section d'entrée (2a) et ladite section de sortie (2b),
**caractérisé en ce que** ledit joint (4b) comprend une première saillie circulaire s'étendant le long d'un bord extérieur dudit joint (4b) et configurée pour s'engager dans un évidement circulaire respectif obtenu dans une paroi extérieure de ladite portion de fixation (2c) et une seconde saillie circulaire (S1) s'étendant autour dudit conduit principal (4b') et configuré pour être insérée au moins partiellement à l'intérieur dudit conduit d'entrée (2c'), ladite première saillie circulaire (S2) et ladite seconde saillie circulaire (S1) délimitant ledit au moins un conduit secondaire (4b").

2. Électrovanne (1) selon la revendication 1, dans laquelle ledit corps cylindrique creux (6) comprend une surface (6') contre-formée sur une surface d'extrémité (3b') dudit noyau (3b) de sorte que ladite surface d'extrémité (3b') adhère audit corps cylindrique creux (6) lorsque le noyau (3b) est dans ladite seconde position de fonctionnement.

3. Électrovanne (1) selon la revendication 2, dans laquelle ladite surface contre-formée (6') fait face audit siège de passage (5) et est formée de manière à avoir une couronne circulaire configurée pour reposer directement sur ledit joint (4b).

4. Électrovanne (1) selon une ou plusieurs des revendications précédentes, comprenant un élément filtrant (9) configuré pour filtrer les impuretés contenues dans ledit fluide entrant dans ladite électrovanne (1), ledit élément filtrant (9) étant retenu entre ledit joint (4b) et ledit corps cylindrique creux (6).

5. Électrovanne (1) selon la revendication 4, dans laquelle ledit élément filtrant (9) a une forme substantiellement circulaire ayant un trou central pour permettre audit corps cylindrique creux (6) d'être inséré dans ledit joint (4b).

6. Électrovanne (1) selon une ou plusieurs des revendications précédentes, dans laquelle ledit corps en forme de boîte (3) comprend une bobine (3c) configurée pour fournir un courant électrique audit solénoïde (3a) de manière à créer un champ magnétique pour déplacer ledit noyau (3b).

7. Électrovanne (1) selon une ou plusieurs des revendications précédentes, dans laquelle ledit solénoïde (3a) comprend une portion (3a') faisant saillie partiellement dudit corps en forme de boîte (3) et configuré pour s'engager par couplage de forme dans une ouverture appropriée d'un composant de fixation (4a), fixé ou pouvant être fixé audit corps en forme de boîte (3) et définissant le siège de passage (5) pour le noyau (3b).

8. Électrovanne (1) selon une ou plusieurs des revendications précédentes, comprenant un élément d'étanchéité (7) configuré pour envelopper extérieurement ledit corps de liaison (4), ledit élément d'étanchéité (7) ayant une extrémité engagée avec ledit corps en forme de boîte (3), à travers l'engagement de moyens de fixation réversibles (8), et une seconde extrémité engagée avec ledit corps de buse (2).

9. Électrovanne (1) selon la revendication 8, dans laquelle lesdits moyens de fixation réversible (8) permettent de verrouiller et de déverrouiller le corps en forme de boîte (3) sur l'élément d'étanchéité (7) pour permettre le remplacement de la bobine (3c).

10. Électrovanne (1) selon la revendication 1, dans laquelle ledit solénoïde (3a) traverse le corps en forme de boîte (3) jusqu'à ce qu'il sorte avec une portion de tête (31a) du corps en forme de boîte (3) ; ladite portion de tête (31a) pouvant être engagée avec des moyens d'accrochage réversibles (8) pour favoriser une liaison amovible du corps en forme de boîte (3) au solénoïde (3a).
